# EUROPÄISCHE PATENTSCHRIFT

(11) **EP 2 579 708 B1**
(45) Veröffentlichungstag und Bekanntmachung des Hinweises auf die Patenterteilung: **10.08.2016**
(21) Anmeldenummer: 11723187.8
(22) Anmeldetag: 01.06.2011
(51) Int. Cl.: A01K 5/02, A23N 17/00

(54) **FLÜSSIGFÜTTERUNGSANLAGE MIT AUFSCHLUSSREAKTOR**
LIQUID FEED DISPENSING SYSTEM HAVING A DIGESTION REACTOR
INSTALLATION DE DISTRIBUTION D'ALIMENTS LIQUIDES ÉQUIPÉE D'UN RÉACTEUR DE DÉCOMPOSITION

(30) Priorität: 08.06.2010 DE 202010007723 U
(43) Veröffentlichungstag der Anmeldung: 17.04.2013
(73) Patentinhaber: Big Dutchman International GmbH, 49377 Vechta-Calveslage (DE)
(72) Erfinder: BÄRLEIN, Norbert, 49661 Cloppenburg (DE); KRUSE, Klaus, 49565 Bramsche (DE)
(74) Vertreter: Eisenführ Speiser
(86) Internationale Anmeldenummer: PCT/EP2011/059067
(87) Internationale Veröffentlichungsnummer: WO 2011/154299

(56) Entgegenhaltungen:
- WO-A1-03/022080
- DE-A1-102004 045 569
- MAKSYM I. BAZHAL; MICHAEL O. NGADI; VIJAYA G.S. RAGHAVAN: "Influence of Pulsed Electroplasmolysis on the Porous Structure of Apple Tissue", BIOSYSTEMS ENGINEERING, Bd. 86(1), 29. Juli 2003 (2003-07-29), Seiten 51-57, XP002658777, DOI: 10.1016/S1537-5110(03)00111-9

## Beschreibung

Die vorliegende Erfindung betrifft eine Flüssigfütterungsanlage für Nutztiere und ein Verfahren zum Anmischen von Flüssigfutter und zum Abgeben des angemischten Flüssigfutters an wenigstens ein Nutztier.

Die Auswahl, Zusammensetzung und physiologische Verwertbarkeit des Futters stellt einen der wesentlichen Leistungsfaktoren in der Nutztieraufzucht und -mast dar. Hierbei müssen die eingesetzten Materialien, die Aufbereitungs- und Fütterungstechnik tierspezifischen anatomischen und ernährungsphysiologischen Erfordernissen angepasst werden. Durch eine Aufbereitung kann neben einer Verbesserung der Futterverwertung eine Verbesserung der Haltbarkeit, der Technisierbarkeit oder der Handhabung erreicht werden. Zusätzlich zu mechanischen Verfahren kann auch Erhitzen, eine Säurebehandlung oder Fermentation (Silieren) zu einem Nährstoffaufschluss führen. Die anschließende Fütterung kann als Trocken- oder Nassfutter erfolgen.

Üblicherweise werden insbesondere mechanische Verfahren zur Erzielung eines Zell- und Nährstoffaufschlusses bei pflanzlichen Rohstoffen eingesetzt, hierzu gehören z.B. die Verfahren Pressen, Expandieren und Extrusion, die mit einem hohen energetischen und apparativen Aufwand verbunden sind und damit für einen Einsatz innerhalb von landwirtschaftlichen Betrieben in der Schweineproduktion mit Nachteilen behaftet sind.

Als Alternative kann ein thermischer Aufschluss erreicht werden, auch hier sind insbesondere der hohe Energieaufwand sowie die Neigung der Produkte zum Anbrennen als wesentliche Nachtteile zu nennen. Bei einem Einsatz von Mais kann alternativ eine Silierung eingesetzt werden, die mit einem hohen Zeitaufwand verbunden ist.

Bei der Flüssigfütterung von Nassfutter werden mindestens zwei Komponenten miteinander vermischt, von denen - im Gegensatz zur Tockenfütterung - mindestens eine Komponente "nass" bzw. flüssig ist. Die flüssige Komponente ist meist Wasser, welches das Tragerfluid für die zugemischte zweite Komponente bildet. Ffüssigfütterungsanlagen sind beispielsweise in der DE 299 13 223 U1, der DE 101 25 468 A1 und der DE 10 2004 037 744 A1 beschrieben.

Die DE 10 2004 045 569 A1 bezieht sich auf eine Vorrichtung zur Mischung und/oder Verteilung von Flüssigfutter in Stallanlagen mit einer dem Rohrnetz zugeordneten Vorrichtung zur Erzeugung aufeinanderfolgender Impulse elektrischer Hochspannung. Die WO 03/022080 betrifft einen Elektroporationsreaktor zur großtechnischen kontinuierlichen Prozessierung von stückigen Produkten.

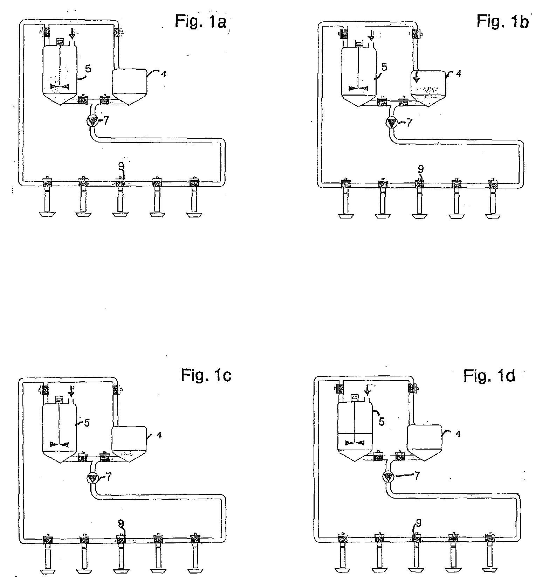

Die Arbeitsweise einer Flüssigfütterungsanlage wird im Folgenden anhand der Figuren 1a bis 1d schematisch erläutert. In Figuren 1a bis 1d ist ein Mischtank 5, ein Brauchwassertank 4, eine Pumpe 7 und Futterventile 9 illustriert.

In den Figuren 1a bis 1d ist eine Anlage für eine Restlosfütterung illustriert. Bei einer solchen Ausführungsform einer Flüssigfütterungsanlage mit Restlosfütterung werden die Futterleitung und die an dieser angeordneten Futterventile mit Brauchwasser gefüllt und eventuelle Futterreste ausgespült. Das Brauchwasser wird anschließend zur Anmischung der nächsten Flüssigfutterration verwendet. Daher weisen Flüssigfütterungsanlagen mit einer Restlosfütterung in der Regel eine Ringleitung auf, die das Brauchwasser an den Futterventilen vorbei zurück zu dem Mischtank führt. Die vorliegende Anmeldung ist jedoch nicht auf Ausführungsformen von Restlosflüssigfütterungsanlagen beschränkt; diese Ausführungsform soll nur zur Illustration der Arbeitsweise einer Flüssigfütterungsanlage dienen.

In Figur 1a ist der Zustand gezeigt, in welchem die Flüssigfutterkomponenten dem Mischtank 5 zugeführt werden. Der Mischtank 5 weist beispielsweise eine Waage auf, die mittels einer Gewichtsbestimmung des Mischtankes 5 feststellen kann, wie viel der Flüssigfutterkomponenten bereits in den Mischtank 5 eingefüllt ist oder noch nachdosiert werden muss. Das Futter wird anschließend in dem Mischtank 5 angemischt.

Figur 1b illustriert die Ausbringung des im Mischtank 5 angemischten Futters durch die Futterleitung und die Futterventile 9. Die Beförderung des angemischten Futters aus dem Mischtank 5 an die Futterventile 9 erfolgt durch die Pumpe 7. Bei einer Restlosfütterungsanlage verdrängt das in die Futterleitung und an die Futterventile 9 gepumpte angemischte Flüssigfutter das in der Futterleitung zuvor befindliche Brauchwasser, welches in den Brauchwassertank 4 verdrängt wird. so wie es in der Figur 1b dargestellt ist. Nach Positionierung der Flüssigfuttersäule an den Futterventilen 9, werden die Futterventile 9 geöffnet und die entsprechende Flüssigfuttermenge wird ausdosiert.

In Figur 1c ist das im Mischtank 5 angemischte Futter vollständig den Futterventilen 9 zugeführt worden. Das in der Futterleitung verbleibende Futter wird mit dem Brauchwasser des Brauchwassertanks 4 verfüttert.

In Figur 1d ist das Futter restlos an die Gruppe ausgegeben. In den Rohrleitungen verbleibt nur noch das Brauchwasser, so dass der Brauchwassertank 4 geleert ist. Das für die darauffolgende Futteranmischung im Mischtank 5 notwendige Wasser wird durch die Futterleitungen gepumpt. Das Ende eines Flüssigfütterungsvorgangs ist erreicht. Der nächste Flüssigfütterungsvorgang wird mit dem Zustand in Figur 1a begonnen.

Als Futterkomponenten des Flüssigfutters kommen üblicherweise Mischungen von Getreideschroten aus Weizen, Gerste oder Soja zum Einsatz. Im Hinblick auf steigende Futtermittelpreise ist auch aus wirtschaftlicher Sicht eine vermehrte Nutzung von Nebenströmen der Agrar- und Lebensmittelindustrie von Interesse. Die ökonomisch interessante Futterpflanze Silomais kommt seit einigen Jahren zum Einsatz. Die Struktur der Maissilage hat dabei wesentlichen Einfluss auf ihre Abbauarbeit durch Enzyme und damit auf Verdaulichkeit und auf die Tiergesundheit.

Das Futter für tragende Sauen muss nach Tierschutznutztierhaltungsverordnung einen Rohfaseranteil von mindestens 8 % aufweisen. Ein solcher Rohfaserträger kann unter anderem Maissilage sein. Maissilage ist jedoch üblicherweise Tiere mit mehrhöhligen Magen (z.B. Kühe) vorbehalten, weil dem Monogastrier (Schwein) die Enzyme für den Abbau von Nicht-Stärke-Polysacchariden und damit einen weitestgehend natürlichen Aufschluss von Silomais fehlen. Der für Schweine zusätzlich erforderliche Aufschluss des Materials kann mechanisch z.B. durch Zerkleinerung erfolgen. Die Verdaulichkeit der Materialien ist dabei vom Zerkleinerungsgrad abhängig, jedoch ist ein hoher Zerkleinerungsgrad mit hohem energetischem Aufwand, Staubbildung und geringer Förderbarkeit und Mechanisierbarkeit verbunden.

Es ist Aufgabe der Erfindung, eine verbesserte Flüssigfütterungsanlage für Nutztiere, insbesondere Schweine, zur Verfügung zu stellen, die zumindest eine Futterkomponente besonders einfach und günstig so aufbereitet, dass sie besonders gut den tierspezifischen anatomischen und ernährungsphysiologischen Erfordernissen angepasst ist. Erfindungsgemäß wird die Aufgabe durch eine Flüssigfütterungsanlage für Nutztiere nach Anspruch 1 gelöst, die aufweist: einen Mischtank zum Anmischen von Flüssigfutter und zum Abgeben des angemischten Flüssigfutters an eine Futterleitung mit wenigstens einem Futterventil zur Abgabe des angemischten Flüssigfutters an wenigstens ein Nutztier, und einen Reaktor mit einem Aufbereitungsbereich und Aufbereitungsmitteln, wobei der Aufbereitungsbereich ausgestaltet ist, um einen pflanzlichen Rohstoff aufzunehmen, und wobei die Aufbereitungsmittel ausgestaltet sind, um den pflanzlichen Rohstoff durch Anlegen eines pulsierenden elektrischen Feldes an eine Zellstruktur des pflanzlichen Rohstoffes in dem Aufbereitungsbereich aufzubereiten, wobei die Flüssigfütterungsanlage ausgestaltet ist, um den pflanzlichen Rohstoff bei einem Energieeintrag im Bereich von 1 - 30, insbesondere 2 - 20, kJ/kg aufzubereiten, und wobei der Mischtank und der Reaktor miteinander verbunden sind, um den aufbereiteten pflanzlichen Rohstoff von dem Reaktor an den Mischtank zum Anmischen des Flüssigfutters aus dem aufbereiteten pflanzlichen Rohstoff zu leiten.

Erfindungsgemäß wurde erkannt, dass neben dem Einsatz von Maissilage ergänzend oder alternativ weitere Futtermaterialien und Nebenströme der landwirtschaftlichen Erzeugung wie Zuckerrüben, Zuckerrohr oder Kartoffeln mit einer gewissen (Rest)Menge verwertbarer Kohlenhydrate als Rohfaserträger eingesetzt werden können. Wenngleich ein vermehrter Einsatz von Nebenströmen insbesondere aus Sicht der Nachhaltigkeit wünschenswert ist, wurde erfindungsgemäß ferner erkannt, dass der notwendige Aufwand für die mechanische Aufbereitung und die relativ geringe Verwertbarkeit dieser Materialien insbesondere durch Monogastrier wesentliche Limitierungen darstellt.

Erfindungsgemäß erfolgt die Aufbereitung des pflanzlichen Rohstoffes (z.B. Zuckerrüben, Zuckerrohr oder Kartoffeln, Maisschrot, Stengeln bzw. -blättern und -Silage sowie Kartoffelnabschnitten, Zuckerrübenabschnitten, Zuckerrahrabschnitten, aber auch andere pflanzliche Rohstoffe sind denkbar) durch einen Zellaufschluss mittels der Anwendung eines gepulsten elektrischen Feldes. Durch Anlegen eines gepulsten elektrischen Felder wird eine Permeabilisierung der biologischen Membranen der Zellen erreicht, wodurch die Verwertbarkeit des so aufbereiteten pflanzlichen Rohstoffes insbesondere für Monogastrier deutlich verbessert wird. Die Verwertbarkeit kann durch eine geeignete Wahl der Parameter der elektrischen Feldstärke, des spezifischen Energieeintrags sowie der Behandlungstemperatur weiter verbessert werden.

Aufgrund von relativ kurzen Prozesszeiten und der Möglichkeit einer, kontinuierlichen Prozessführung bietet die Verwendung gepulster elektrischer Felder als Zellaufschlussverfahren in der erfindungsgemäßen Flüssigfütterungsanlage deutliche Vorteile (z.B. geringer Energie- und Zeitbedarf, reduzierte Kosten) gegenüber den bekannten mechanischen und/oder enzymatischen Verfahren, vor allem bei förderfähigen Produkten.

Der Erfindung llegt also der Gedanke zugrunde, dass ein pflanzlicher Rohstoff durch Anlegen eines (oder mehrerer) pulsierenden elektrischen Feldes aufbereitet wird, wodurch ein Aufschluss, insbesondere Stärkeaufschluss, stattfindet. Das in der erfindungsgemäßen Flüssigfütterungsanlage angewandte Zellaufschlussverfahren verbessert die Verwertung des pflanzlichen Rohstoffs als Futter insbesondere für Schweine. Die Aufbereitung mittels des pulsierenden elektrischen Feldes führt zu einer Futterkosteneinsparung durch günstigere Komponenten, da Futterkomponenten zur Verfügung stehen, die bisher allein den Polygastriern vorbehalten waren. Ferner kann eine bessere Tiergesundheit erreicht werden, da ein hoher Rohfaseranteil für die Verdaulichkeit bekömmlich ist und insbesondere bei Sauen ein Rohstofffaseranteil von mindestens 8% vorgeschrieben ist. Erfindungsgemäß wird die Verwertung von (z.B. Schweine-)Futter mit dem Verfahren der gepulsten elektrischen Felder für die Aufbereitung eines pflanzliches Rohstoffes in einer Flüssigfütterungsanlage verbessert, wodurch insbesondere ein nichtthermischen Aufschluss ohne Einsatz weiterer Hilfsstoffe wie Enzyme oder den Eintrag mechanischer Energie ermöglicht wird.

Bevorzugt weist die erfindungsgemäße Flüssigfütterungsanlage mindestens einen Reaktor auf, der mindestens ein Aufbereitungsmittel und mindestens einen Aufbereitungsbereich aufweist. Erfindungsgemäß ist aber auch eine Flüssigfütterungsanlage mit einer Vielzahl von Reaktoren, Aufbereitungsmitteln und/oder Aufbereitungsbereichen bevorzugt.

Der bevorzugt kontinuierlich arbeitende erfindungsgemäße Reaktor ist besonders einfach in Fütterungsanlagen z.B. in der Schweinemast einsetzbar und weist einen Pulsgenerator (auch als "Aufbereitungsmittel" bezeichnet) sowie eine Behandlungszelle (auch als "Aufbereitungsbereich" bezeichnet) auf. Alternativ ist bevorzugt, dass der Reaktor diskontinuierlich arbeitet.

Bevorzugt weist die Behandlungszelle ein Volumen im Bereich von 100 - 1000, insbesondere von 400 - 600, ml auf. In der Behandlungszelle wird das pflanzliche Material den durch den Pulsgenerator erzeugten gepulsten elektrischen Feldern mit einer Feldstärke ausgesetzt, die zu einer Permeabilisierung der Zellmembranen, der Freisetzung der Zellinhaltsstoffe und einer verbesserten Verwertung des Futters führt. Bevorzugt ist der Reaktor ein gekapseltes Gehäuse, in dem die Behandlungszelle sowie der Pulsgenerator untergebracht sind.

Der Reaktor weist bevorzugt eine Steuereinheit zur Steuerung des Betriebes der Behandlungszelle und/oder des Pulsgenerator auf. Alternativ oder ergänzend ist bevorzugt, dass der Reaktor eine Schnittstelleneinheit insbesondere zum Verbinden mit einer externen Steuereinheit (beispielsweise die der Flüssigfütterungsanlage) aufweist. Vorteilhaft ist so der Betrieb und die Ansteuerung des Reaktors als stand-alone-Betrieb und/oder unter Einbindung in eine Gesamt-Anlagensteuerung möglich. Bevorzugt weist die Schnittstelleneinheit eine oder eine Vielzahl von Schnittstellen für Stoff- und Energieströme und/oder Steuersignale auf. Ferner ist bevorzugt, dass der Reaktor ausgestaltet ist, um von einer Flüssigfütterungssteuereinheit gesteuert zu werden.

Bevorzugt ist die erfindungsgemäße Flüssigfütterungsanlage und/oder der erfindungsgemäße Reaktor ausgestaltet, um 0,2 bis 2, insbesondere 0,5 bis 1, Tonnen Futter pro Stunde aufzubereiten. Bevorzugt ist der Pulsgenerator ausgestaltet, um 0,2 bis 2, insbesondere 0,5 bis 1, Tonnen Schweinefutter pro Stunde aufzubereiten. Bevorzugt weist der Pulsgenerator einen Pulstransformator (insbesondere einen Hochspannungsimpulstransformator), einen Sperrwandler und/oder einen nach dem Marx-Prinzip arbeitenden Marx-Generator auf. Der Einsatz eines Pulstransformators ermöglicht eine Reduktion des Anteils hochspannungsführender Bauteile, so kann etwa die Energieversorgung sowie die Pulserzeugung auf vergleichsweise niedrigem Spannungsniveau bei anschließender Transformation erfolgen. Der Einsatz eines Sperrwandlers ermöglicht eine induktive Energiespeicherung innerhalb einer Spule, diese weist im Vergleich zu einem kapazitiven Speicher (Kondensator) eine höhere Energiedichte und damit geringere Kosten auf. Ein sogenannter Marx-Generator beruht auf dem parallelen Laden mehrerer Kondensatoren und ihrer Entladung durch eine Serienschaltung. Dies ermöglicht eine hohe Entladespannung bei geringer Ladespannung und damit den Einsatz günstiger Kondensatorladegeräte. Bevorzugt weist der Marx-Generator mindestens einen Halbleiterschalter auf, wodurch vorteilhaft eine Pulswiederholrate von mehr als 30 Pulsen pro Sekunde erreicht werden kann.

Bevorzugt weist der Reaktor eine durch einen Isolator voneinander getrennte Elektrodenanordnung auf. Bevorzugt weist die Elektrodenanordnung koaxial und/oder kollinear angeordnete Elektroden auf, die insbesondere unterschiedliche Innendurchmesser und/oder Verhältnisse aus Elektrodenfläche und -abstand aufweisen. Vorteilhaft können durch geeignete Auswahl der Elektrodenanordnung die Förderfähigkeit und Reinigbarkeit, aber auch auf die elektrischen Eigenschaften der Behandlungsstrecke in dem Aufbereitungsbereich, verbessert werden. Bevorzugt weist die Elektrodenanordnung einen Mindest-Querschnitt im Bereich von 7-10 cm² und einen Lastwiderstand im Bereich 50 - 100 Ohm auf. Vorteilhaft wird so eine Behandlungszelle mit einem geringen Wartungs- und Reinigungsaufwand und einem an den Pulsgenerator angepassten Lastwiderstand zu Verfügung gestellt. Für die Elektroden bzw. Isolatoren werden bevorzugt Materialien wie Edelstahl, Titan bzw. PEEK, Teflon und/oder Keramik eingesetzt. Vorteilhaft wird so der Einfluss einer elektrochemischen Korrosion bzw. mechanischen Erosion zu verringert.

Bevorzugt weist der Reaktor ein modulares Schaltsystem auf. Vorteilhaft kann so eine Skalierung der Pulserzeugung auf unterschiedliche Behandlungskapazitäten durch Nutzung einer unterschiedlichen Zahl von bevorzugt parallel geschalteten Modulen erfolgen. Auf diese Weise können Kosten für eine Planung und Realisation einer erfindungsgemäßen Flüssigfütterungsanlage in unterschiedlichen Größenordnungen reduziert werden.

Bevorzugt ist der Reaktor ausgestaltet, um kontinuierlich zu arbeiten (d.h. um kontinuierlich den pflanzlichen Rohstoff aufzubereiten). Bevorzugt weist die Behandlungszelle einen Durchmesser im Bereich von 10 - 100, insbesondere von 30 - 50, mm auf. Die Aufbereitung erfolgt bevorzugt kontinuierlich innerhalb der Behandlungszelle mit einem Durchmesser im Bereich von 10 - 100, insbesondere von 30 - 50, mm, wodurch vorteilhaft eine für den Zellaufschluss geeignete elektrische Feldstärke im Bereich von einigen kV/cm (bevorzugt 1 -10 kV/cm und insbesondere bevorzugt 0,5 - 3 kV/cm) erreicht wird.

Bevorzugt ist die Flüssigfütterungsanlage ausgestaltet, um einen Durchsatz von bis 1 t/h zu erzielen, während der Pulsgenerator bevorzugt mit Pulswiederholraten im Bereich von 70 bis 120, insbesondere 85 bis 100, Hz arbeitet. Vorteilhaft wird in der Behandlungszelle (die ein Volumenelement darstellt) eine ausreichende Behandlung erzielt. Bevorzugt hängt die Ausgestaltung der Behandlungszellen von rheologischen Eigenschaften des aufzubereitenden pflanzlichen Rohstoffes ab, um eine möglichst homogene Aufbereitung zu erzielen und Verstopfungen und/oder Ablagerungen zu vermeiden.

Bevorzugt weist die erfindungsgemäße Flüssigfütterungsanlage Mittel auf, um eine Staub- und/oder Schmutzbelastung zu reduzieren, um eine Temperatur- und Luftfeuchte auszugleichen und/oder um eine Anlagen- und Betriebssicherheit sicherzustellen. Bevorzugt weist die Flüssigfütterungsanlage gemäß der Erfindung Mittel zur Abtrennung von Fremdkörpern auf. Vorteilhaft ist die erfindungsgemäße Flüssigfütterungsanlage bzw. deren Ausführung so den Hygieneanforderungen, der Betriebssicherheit sowie den Umgebungsbedingungen in der Umgebung eines Nutztierbetriebes angepasst,

Die erfindungsgemäße Flüssigfütterungsanlage arbeitet bei einem Energieeintrag im Bereich von 1 - 30, insbesondere 2 - 20, kJ/kg. Bevorzugt arbeitet die erfindungsgemäße Flüssigfütterungsanlage bei 1,5 - 5, insbesondere 2,5 - 3,5, kW installierter elektrischen Leistung für eine stündliche Behandlungskapazität zur Aufbereitung von 1 Tonne pflanzlichem Rohstoff zur Aufbereitung des pflanzlichen Rohstoffes. Aufgrund der bevorzugt kurzen Prozesszeiten im Bereich <1s und der bevorzugt kontinuierlichen Prozessführung (d.h. Aufbereitung) bietet der Einsatz gepulster elektrischer Felder als Zellaufschlussverfahren in einer erfindungsgemäßen Flussigfütterungsanlage große Vorteile gegenüber den mechanischen oder enzymatischen Verfahren, insbesondere bei förderfähigen pflanzlichen Rohstoffen.

Bevorzugt ist der Reaktor ausgestaltet, um in zumindest einem der Parameter der elektrischen Feldstärke, des spezifischen Energieeintrags sowie der Behandlungstemperatur verändert zu werden. Bevorzugt weist der Pulsgenerator eine Schalttypologie auf Transformatorbasis auf.

Bevorzugt weist der Reaktor eine Messeinheit zur Bestimmung von Qualitats- und/oder Verwertbarkeitsparametern (z.B. umsetzbare Energie, Trockenmasse, Rohasche, Gesamt- und extrahierbarer Fett-, Protein-, Stärke- und Zuckergehalt) des pflanzlichen Rohstoffes bzw. des aufbereiteten pflanzlichen Rohstoffes auf. Bevorzugt ist der Reaktor ausgestaltet, um den Betrieb des Pulsgenerators und/oder der Behandlungszelle in Abhängigkeit von dem/n bestimmten Qualitäts- und/oder Verwertbarkeitsparametern zu regeln.

Bevorzugt weist der Reaktor einen Reaktorzulauf auf, der ausgestaltet ist, um mit einem Rohstoffsilo, welches ausgestaltet ist, um den pflanzlichen Rohstoff zu bevorraten, verbunden zu werden, und um dem Reaktor den pflanzlichen Rohstoff zuzuführen, und der Reaktor weist einen Reaktorablauf auf, der ausgestaltet ist, um mit dem Mischtank verbunden zu werden und um den aufbereiteten pflanzlichen Rohstoff an den Mischtank abzuführen. Ferner ist bevorzugt, dass die erfindungsgemäße Flüssigfütterungsanlage ein Rohstoffsilo aufweist, welches mit dem Reaktor verbunden ist, um dem Reaktor den pflanzlichen Rohstoff zuzuführen. Bevorzugt weist der Mischtank einen ersten Mischtankzulauf aufweist, der mit dem Reaktorablauf fluidleitend verbunden ist. Bevorzugt weist die Flüssigfütterungsanlage ferner eine Ringleitung und/oder Stichleitung als die Futterleitung auf, und der Mischtank weist einen Mischtankablauf auf, der mit der Ringleitung und/oder Stichleitung fluidleitend verbunden ist. Ferner ist bevorzugt, dass die Flüssigfütterungsanlage ferner eine Rohstoffpumpe und/oder eine Förderschnecke aufweist, die mit dem Reaktor verbunden und ausgestaltet ist, um den aufbereiteten pflanzlichen Rohstoff dem Mischtank zuzuführen, und/oder dass die Flüssigfütterungsanlage ferner eine Futterpumpe aufweist, die fluidtechnisch mit dem Mischtank verbunden und ausgestaltet ist, um das angemischte Flüssigfutter der Futterleitung zuzuführen. Bevorzugt weist die Flüssigfütterungsanlage ferner ein Komponentensilo auf, welches ausgestaltet ist, um eine Flüssigfutterkomponente zu bevorraten, wobei der Mischtank einen zweiten Mischtankzulauf aufweist, der mit dem Komponentensilo verbunden und ausgestaltet ist, um die Flüssigfutterkomponente dem Mischtank zuzuführen, und der Mischtank ist ausgestaltet, um das Flüssigfutter aus dem aufbereiteten pflanzlichen Rohstoff und der Flüssigfutterkomponente anzumischen. Bevorzugt weist die Flüssigfütterungsanlage ferner einen Wassertank aufweist, welcher ausgestaltet ist, um Wasser zu bevorraten, und der Mischtank weist einen dritten Mischtankzulauf auf, der mit dem Wassertank fluidtechnisch verbunden und ausgestaltet ist, um das Wasser dem Mischtank zuzuführen. Bevorzugt weist die Flüssigfütterungsanlage ferner eine Mahleinheit und/oder Mischeinheit aufweist, die zwischen dem Rohstoffsilo und dem Reaktor angeordnet und ausgestaltet ist, um den pflanzlichen Rohstoff zu mahlen und/oder zu mischen, und/oder die Flüssigfütterungsanlage weist ferner eine Mahleinheit und/oder Mischeinheit auf, die zwischen dem Reaktor und dem Mischtank angeordnet und ausgestaltet ist, um den aufbereiteten pflanzlichen Rohstoff zu mahlen und/oder zu mischen, und/oder die Flüssigfütterungsanlage weist ferner eine Wiegeeinheit auf, die ausgestaltet ist, um das Gewicht und/oder den Füllstand des Mischtankes zu bestimmen.

In einem weiteren Aspekt betrifft die Erfindung einen Reaktor, der ausgestaltet ist, um einen pflanzlichen Rohstoff zur Anmischung von Flüssigfutter für wenigstens ein Nutztier aufzubereiten, wobei der Reaktor mindestens einen Aufbereitungsbereich und wenigstens ein Aufbereitungsmittel aufweist, wobei der Aufbereitungsbereich ausgestaltet ist, um einen pflanzlichen Rohstoff aufzunehmen, und wobei das Aufbereitungsmittel ausgestaltet ist, um den pflanzlichen Rohstoff durch Anlegen eines pulsierenden elektrischen Feldes an eine Zellstruktur des pflanzlichen Rohstoffes in dem Aufbereitungsbereich bei einem Energieeintrag im Bereich von 1 - 30, insbesondere 2 - 20, kJ/kg aufzubereiten. Besonders bevorzugt ist der Reaktor zu Verwendung in einer erfindungsgemäßen Flüssigfütterungsanlage ausgestaltet.

In einem weiteren Aspekt betrifft die Erfindung eine Verwendung eines Reaktors zum Aufbereiten eines pflanzlichen Rohstoffes in einer Flüssigfütterungsanlage nach der Erfindung, wobei der Reaktor ausgestaltet ist, um den pflanzlichen Rohstoff zur Anmischung von Flüssigfutter für wenigstens ein Nutztier aufzubereiten, wobei der Reaktor mindestens einen Aufbereitungsbereich und mindestens ein Aufbereitungsmittel aufweist, wobei der Aufbereitungsbereich ausgestaltet ist, um einen pflanzlichen Rohstoff aufzunehmen, und wobei das Aufbereitungsmittel ausgestaltet ist, um den pflanzlichen Rohstoff durch Anlegen eines pulsierenden elektrischen Feldes an eine Zellstruktur des pflanzlichen Rohstoffes in dem Aufbereitungsbereich bei einem Energieeintrag im Bereich von 1 - 30, insbesondere 2 - 20, kJ/kg aufzubereiten.

In einem weiteren Aspekt betrifft die Erfindung ein Verfahren zum Anmischen von Flüssigfutter und zum Abgeben des angemischten Flüssigfutters an wenigstens ein Nutztier, mit den Schritten: Aufbereiten eines pflanzlichen Rohstoffes durch Anlegen eines pulsierenden elektrischen Feldes an eine Zellstruktur des pflanzlichen Rohstoffes bei einem Energieeintrag im Bereich von 1 - 30, insbesondere 2 - 20, kJ/kg, Anmischen des Flüssigfutters aus dem aufbereiteten pflanzlichen Rohstoff, und Abgeben des angemischten Flüssigfutters an das wenigstens eine Nutztier.

In einem weiteren Aspekt der nicht Teil der Erfindung ist betrifft eine Biogasanlage zum Erzeugen von Biogas aus Bioanteilen eines aufbereiteten pflanzlichen Rohstoffs, wobei die Biogasanlage ausgestaltet ist, um mit einer Flüssigfütterungsanlage nach der Erfindung und/oder einem Reaktor zur Verwendung in einer erfindungsgemäßen Flüssigfütterungsanlage verbunden zu werden, wobei die Biogasanlage eine Trenneinheit aufweist, die ausgestaltet ist, um mit dem Reaktor verbunden zu werden und um die Bioanteile des aufbereiteten pflanzlichen Rohstoffs aus dem aufbereiteten pflanzlichen Rohstoff zu trennen, und wobei die Biogasanlage einen Biogaserzeugungsbereich aufweist, wobei der Trennbereich ausgestaltet ist, um dem Biogaserzeugungsbereich die Bioanteile zuzuführen, und wobei der Biogaserzeugungsbereich ausgestaltet ist, um Biogas aus den Bioanteilen zu erzeugen.

Bevorzugte Ausführungsformen der Erfindung werden im Folgenden anhand von Figuren erläutert, in denen
- Figuren 1a bis 1d: eine bekannte Restlosfütterungsanlage zeigen,
- Figur 2: eine Ausführungsform einer Flüssigfütterungsanlage der Erfindung zeigt,
- Figur 3: eine Ausführungsform einer erfindungsgemäßen Restlosfütterungsanlage mit Rohrspülung zeigt,
- Figur 4: eine Ausführungsform einer erfindungsgemäßen Restlosfütterungsanlage mit Rohrspülung und mit gewogenem Frisch- und/oder Brauchwassertank zeigt,
- Figur 5: eine Ausführungsform einer erfindungsgemäßen Synchronfütterungsanlage zeigt, und
- Figur 6: eine Ausführungsform einer erfindungsgemäßen Kompaktflüssigfütterungsanlage zeigt.

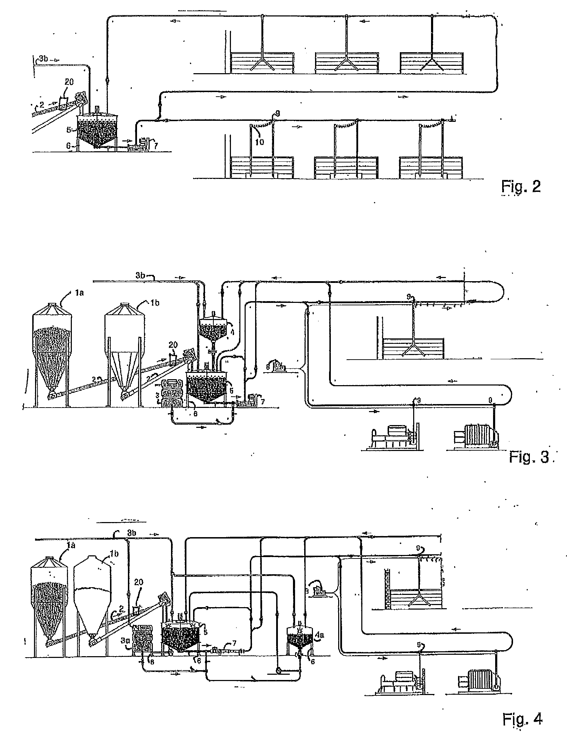

Figur 2 zeigt eine Ausführungsform einer Flüssigfütterungsanlage gemäß der Erfindung. Die Flüssigfütterungsanlage weist einen Reaktor 20 und einen Mischtank 5 auf. Der Mischtank 5 ist an eine elektrische Wiegung 6 gekoppelt, über die das Gewicht bzw. die Füllmenge des Mischtanks 5 festgestellt werden kann. Der Reaktor 20 ist mittels einer Futterschnecke 2 an ein in Figur 2 nicht dargestelltes Rohstoffsilo 1a angeschlossen und erhält über die Futterschnecke 2 den pflanzlichen Rohstoff zur Aufbereitung. Der im Reaktor 20 aufbereitete pflanzliche Rohstoff wird z.B. über eine weitere Futterschnecke und/oder über eine Pumpe) dem Mischtank 5 zugeführt. Die Flüssigfütterungsanlage der Figur 2 ist beispielsweise eine kontinuierlich betriebene Anlage mit einer Leistung von 3 - 5 kW und einer maximalen Spannung von 25 kV und bereitet 1 Tonne pflanzlichen Rohstoff pro Stunde auf.

Der Mischtank 5 verfügt über einen Zulauf 3b, der an eine Frischwasserquelle angeschlossen ist. Der Mischtank 5 weist einen Ablauf auf, der mit einer Futterpumpe 7 verbunden ist. Die Futterpumpe 7 ist ausgestaltet, um das angemischte Flüssigfutter und/oder Wasser aus dem Mischtank 5 in die Futterleitungen und zu den Futterventilen 9 zu pumpen. In Figur 2 ist sowohl eine Stichleitung, wie auch eine Ringleitung zu den Futterventilen 9 illustriert. An den Futterventilen 9 sind an der Stichleitung Sensoren 10 angeordnet, die die ausgebrachte Futtermenge bestimmen können. Der Mischtank 5 der Figur 2 weist ferner einen Zulauf auf, der mit der Ringleitung verbunden ist, so dass Futter oder Brauchwasser aus der Ringleitung zurück in den Mischtank 5 geführt werden kann. In Figur 2 ist schematisch dargestellt, dass eine zweite Futterschnecke 2 eine weitere Komponente dem Mischtank 5 zur Anmischung des Flüssigfutters zuführen kann.

In Figur 3 ist eine Ausführungsform einer Flüssigfütterungsanlage mit Rohrspülung gezeigt. Soweit die Bezugszeichen und deren Einheiten bereits unter Bezugnahme auf Figuren 2 und 1a bis 1d erläutert wurden, gelten diese in analoger Weise auch für die Figuren 3 bis 6.

Figur 3 illustriert ein Rohstoffsilo 1a zur Bevorratung des pflanzlichen Rohstoffes. Das Rohstoffsilo 1 a ist mittels der Futterschnecke 2 mit dem Reaktor 20 und dem Mischtank 5 verbunden. Die Flüssigfütterungsanlage der Figur 3 weist ferner ein Flüssigfutterkomponentensilo 1b auf, welches ebenfalls über eine Futterschnecke 2 mit dem Mischtank 5 verbunden ist, um die im Flüssigfutterkomponentensilo 1b bevorratete Komponente dem Mischtank 5 zuzuführen.

Der Mischtank 5 ist mit einem Brauchwassertank 4 verbunden, um von diesem Brauchwasser für das Anmischen des Futters und die Rohrspülung zu erhalten. Der Ablauf des Mischtanks 5 ist mit einem Frischwassertank 3 verbunden, so dass das angemischte Flüssigfutter mit Frischwasser verdünnt werden kann oder die Rohrleitungen mit Frischwasser gespült werden können. Der Mischtank 5 weist ferner einen Frischwasserzulauf 3b einer weiteren Frischwasserquelle auf. Auch der Mischtank 5 der in Figur 3 gezeigten Ausführungsform ist mit einer elektronischen Wiegung 6 verbunden. Mit Bezugszeichen 8 ist ein Kompressor bezeichnet, welcher an Futterventile 9 angeschlossen ist.

In Figur 4 ist eine Ausführungsform einer erfindungsgemäßen Flüssigfütterungsanlage mit Rohrspülung und mit gewogenem Frisch- und/oder Brauchwassertank gezeigt. Die Ausführungsform der Figur 4 entspricht im Wesentlichen der der Figur 3 mit dem Unterschied, dass die Anlage der Figur 4 einen gewogenen Frischwassertank 3a und einen gewogenen Brauchwassertank 4a aufweist. Ferner ergeben sich durch die gegenüber der Ausführungsform der Figur 3 geänderte Anordnung des gewogenen Brauchwassertanks 4a neben dem Mischtank 5 geänderte Führungen der Leitungen, um das Brauchwasser dem Mischtank 5 bzw. der Futterpumpe 7 zuzuführen.

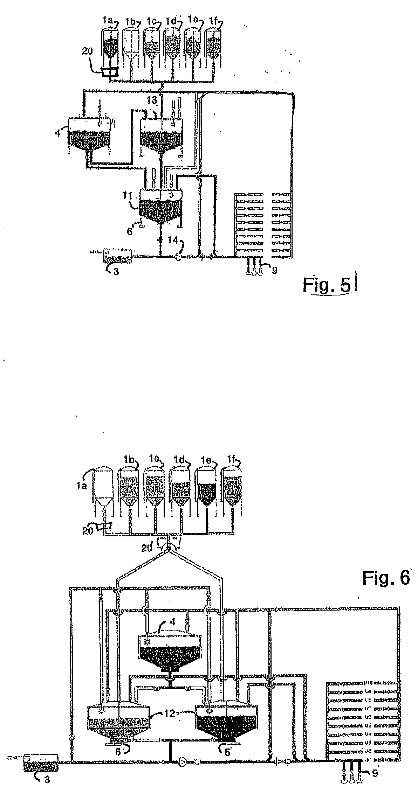

Figur 5 zeigt eine Synchronflüssigfütterungsanlage. Die Flüssigfütterungsanlage weist ein Rohstoffsilo 1a und eine Vielzahl von Flüssigfutterkomponentensilos 1b bis 1f auf. All diese Silos 1a bis 1f sind mit einem Anmischtank 13 verbunden und ausgestaltet, dem Anmischtank 13 ihren Inhalt zuzuführen. Der Anmischtank 13 weist einen Zulauf auf, der mit dem Ablauf des Brauchwassersilos 4 verbunden ist. Der Ablauf des Anmischtanks 13 ist mit einem Fütterungstank 11 verbunden, ebenso wie ein Ablauf des Brauchwassertanks 4 mit dem Fütterungstank 11 verbunden ist. Figur 5 illustriert ferner einen Fremdkörperabscheider 14.

Sowohl der Anmischtank 13 wie auch der Fütterungstank 11 sind mit einer elektronischen Wiegung 6 ausgestattet. Der Ablauf des Fütterungstanks 11 ist mit Fütterungsventilen 9 und mit einem Frischwasserzulauf eines Frischwassertanks 3 verbunden.

Die Synchronflüssigfütterungsanlage veranlasst ein Vermengen der jeweiligen Futterkomponenten der Silos 1a bis 1f im Anmischtank 13. Die Komponente des Rohstoffsilos 1a wird durch den erfindungsgemäßen Reaktor 20 geführt und in diesem aufbereitet. Der vom Reaktor 20 aufbereitete pflanzliche Rohstoff wird dem Anmischtank 13 zugeführt. Sind die Flüssigfutterkomponenten im Anmischtank 13 mit dem aufbereiteten pflanzlichen Rohstoff vermengt worden, werden sie in den Fütterungstank 11 entleert und von dort zu den einzelnen Futterventilen 9 gepumpt. Während der Fütterungstank 11 noch gefüllt ist, kann in dem Anmischtank 13 bereits die nächste Flüssigfütterungsmenge angemischt werden.

In Figur 6 ist eine Kompaktflüssigfütterungsanlage dargestellt. Die Kompaktflüssigfütterungsanlage weist ein pflanzliches-Rohstoff-Silo 1a, Flüssigfutterkomponentensilos 1b bis 1f, einen Frischwassertank 3, einen Brauchwassertank 4, zwei Anmisch-/Fütterungstanks 12, die jeweils an eine elektronische Wiegung 6 angeschlossen sind, und Fütterungsventile 9 auf. Der erfindungsgemäße Reaktor 20 kann beispielsweise am Ausgang des Rohstoffsilos 1a oder in dem Zulauf zu den Anmisch-/Fütterungstanks 12 angeordnet sein (letzte Variante ist in Figur 6 durch Bezugszeichen 20 angedeutet; eine analoge Anordnung ist auch in Figur 5 möglich).

Bei der in Figur 6 gezeigten Kompaktflüssigfütterungsanlage fungieren die Anmisch-/Fütterungstanks 12 gleichzeitig als Anmisch- und Fütterungstank. Dazu wird die gesamte benötigte Futtermenge in mehrere kleine Portionen aufgeteilt. Während in einem Tank das Futter angemischt wird, erfolgt gleichzeitig das Ausdosieren des zweiten Tankinhalts. Zwischen den Fütterungen von optional sogar verschiedenen Rezepturen, die in unterschiedlichen Anmisch-/Fütterungstanks 12 zubereitet werden, gibt es vorteilhaft keine Wartezeiten. Ferner kann eine besonders kompakte Bauweise einer Flüssigfütterungsanlage erreicht werden.

In den Figuren nicht oder nicht durchgehend dargestellt, aber trotzdem bevorzugt vorhanden sind Vorrichtungen wie Futterschnecken, Spiralen, Seil- und Kettenförderer, Rührwerke, Ventile, Kompressoren, Reinigungsmechanismen, Mahleinheiten, Mischeinheiten, Steuerungseinheiten und andere für Flüssigfutteranlagen verwendeten Einheiten.

Die Anlagen der Figuren 2 bis 6 können mit einer Biogasaniage zum Erzeugen von Biogas aus Bioanteilen eines aufbereiteten pflanzlichen Rohstoffs verbunden sein oder werden. Eine solche Biogasanlage ist ausgestaltet ist, um mit einer Flüssigfütterungsanlage und/oder einem Reaktor gemäß der Erfindung verbunden zu werden, und weist eine Trenneinheit auf, die ausgestaltet ist, um mit dem Reaktor verbunden zu werden und um die Bioanteile des aufbereiteten pflanzlichen Rohstoffs aus dem aufbereiteten pflanzlichen Rohstoff zu trennen, und einen Biogaserzeugungsbereich auf, wobei der Trennbereich ausgestaltet ist, um dem Biogaserzeugungsbereich die Bioanteile zuzuführen, und wobei der Biogaserzeugungsbereich ausgestaltet ist, um Biogas aus den Bioanteilen zu erzeugen.

## Patentansprüche

1. Flüssigfütterungsanlage für Nutztiere mit
einem Mischtank (5) zum Anmischen von Flüssigfutter und zum Abgeben des angemischten Flüssigfutters an eine Futterleitung mit wenigstens einem Futterventil (9) zur Abgabe des angemischten Flüssigfutters an wenigstens ein Nutztier, und einem Reaktor (20) mit einem Aufbereitungsbereich und einem Aufbereitungsmittel,
wobei der Aufbereitungsbereich ausgestaltet ist, um einen pflanzlichen Rohstoff aufzunehmen, und
wobei das Aufbereitungsmittel ausgestaltet ist, um den pflanzlichen Rohstoff durch Anlegen eines pulsierenden elektrischen Feldes an eine Zellstruktur des pflanzlichen Rohstoffes in dem Aufbereitungsbereich aufzubereiten,
wobei die Flüssigfütterungsanlage ausgestaltet ist, um den pflanzlichen Rohstoff bei einem Energieeintrag im Bereich von 1 - 30, insbesondere 2 - 20, kJ/kg aufzubereiten,
wobei der Reaktor (20) mindestens einen Reaktorzulauf aufweist, der ausgestaltet ist, um mit mindestens einem Rohstoffsilo (1a), welches ausgestaltet ist, um den pflanzlichen Rohstoff zu bevorraten, verbunden zu werden und um dem Reaktor (20) den pflanzlichen Rohstoff zuzuführen, und
wobei der Reaktor (20) einen Reaktorablauf aufweist, der ausgestaltet ist, um mit dem Mischtank (5) verbunden zu werden und um den aufbereiteten pflanzlichen Rohstoff an den Mischtank (5) abzuführen,
wobei der Mischtank (5) einen ersten Mischtankzulauf aufweist, der mit dem Reaktorablauf (20) fluidleitend verbunden ist, und
wobei der Mischtank (5) und der Reaktor (20) miteinander verbunden sind, um den aufbereiteten pflanzlichen Rohstoff von dem Reaktor (20) an den Mischtank (5) zum Anmischen des Flüssigfutters aus dem aufbereiteten pflanzlichen Rohstoff zu leiten.

2. Flüssigfütterurigsanlage nach Anspruch 1,
wobei der Reaktor (20) mindestens einen weiteren Aufbereitungsbereich und/oder mindestens ein weiteres Aufbereitungsmittel aufweist.

3. Flüssigfütterungsanlage nach Anspruch 1 oder 2,
wobei der Aufbereitungsbereich eine Behandlungszelle ist, die insbesondere ein Volumen im Bereich von 100 - 1000, insbesondere von 400 - 600, ml aufweist und/oder die insbesondere einen Durchmesser im Bereich von 10 - 100, insbesondere von 30 - 50, mm aufweist;
und/oder
wobei der Reaktor (20) eine Steuereinheit zur Steuerung des Betriebes des Aufbereitungsbereichs und/oder des Aufbereitungsmittels aufweist, und/oder wobei der Reaktor (20) eine Schnittstellenelnheit insbesondere zum Verbinden mit einer externen Steuereinheit aufweist:
und/oder
wobei das Aufbereitungsmittel ein Pulsgenerator ist, der insbesondere einen Pulstransformator, insbesondere einen Hochspannungsimpulstransformator, einen Sperrwandler und/oder einen nach dem Marx-Prinzip arbeitenden Marx-generator aufweist;
und/oder
wobei das Aufbereitungsmittel ausgestaltet ist, um den pflanzlichen Rohstoff durch Anlegen eines pulsierenden elektrischen Feldes mit einer Pulswiederholrate von mehr als 30 Pulsen pro Sekunde, insbesondere von mehr als 60 Pulsen pro Sekunde, aufzubereiten;
und/oder
wobei der Reaktor (20) eine durch einen Isolator voneinander getrennte Elektrodenanordnung aufweist

4. Flüssigfütterungsanlage nach einem der vorstehenden Ansprüche,
wobei der Reaktor (20) ein modulares Schaltsystem aufweist,
wobei ein erstes Modul des modularen Schaltsystems den Aufbereitungsbereich und das Aufbereitungsmittel aufweist, und
wobei ein zweites Modul des modularen Schaltsystems einen weiteren Aufbereitungsbereich und ein weiteres Aufbereitungsmittel aufweist.

5. Flüssigfütterungsanlage nach einem der vorstehenden Ansprüche,
wobei die Flüssigfütterungsanlage ausgestaltet ist, um den pflanzlichen Rohstoff bei einer Leistung von 1,5 - 5, insbesondere 2,5 - 3,5, kW je Tonne des pflanzlichen Rohstoffs aufzubereiten.

6. Flüssigfütterungsanlage nach einem der vorstehenden Ansprüche,
wobei der Reaktor (20) eine Messeinheit zur Bestimmung von Qualitäts- und/oder Verwertbarkeitsparametern, insbesondere umsetzbarer Energie, Trockenmasse, Rohasche, Gesamt- und extrahierbarer Fett-, Protein-, Stärke- und Zuckergehalt, des pflanzlichen Rohstoffes bzw. des aufbereiteten pflanzlichen Rohstoffes aufweist, und/oder
wobei der Reaktor (20) ausgestaltet ist, um den Betrieb des Aufbereitungsbereichs und/oder des Aufbereitungsmittels in Abhängigkeit von dem/n bestimmten Qualitäts- und/oder Verwertbarkeitsparametern zu regeln.

7. Flüssigfütterungsanlage nach einem der vorstehenden Ansprüche,
wobei die Flüssigfütterungsanlage ferner mindestens ein Rohstoffsilo (1a) aufweist, welches mit dem Reaktor (20) verbunden ist, um dem Reaktor (20) den pflanzlichen Rohstoff zuzuführen.

8. Flüssigfütterungsanlage nach einem der vorstehenden Ansprüche,
wobei die Flüssigfütterungsanlage ferner eine Ringleitung und/oder Stichleitung als die Futterleitung aufweist, und
wobei der Mischtank (5) einen Mischtankablauf aufweist, der mit der Ringleitung und/oder Stichleitung fluidleitend verbunden ist.

9. Flüssigfütterungsanlage nach einem der vorstehenden Ansprüche,
wobei die Flüssigfütterungsanlage ferner eine Rohstoffpumpe und/oder eine Förderschnecke (2) aufweist, die mit dem Reaktor (20) verbunden und ausgestaltet Ist, um den aufbereiteten pflanzlichen Rohstoff dem Mischtank (5) zuzuführen, und/oder
wobei die Flüssigfütterungsanlage ferner eine Futterpumpe (7) aufweist, die fluidtechnisch mit dem Mischtank (5) verbunden und ausgestaltet ist, um das angemischte Flüssigfutter der Futterleitung zuzuführen.

10. Flüssigfütterungsanlage nach einem der vorstehenden Ansprüche,
wobei die Flüssigfütterungsanlage ferner ein Komponentensilo (1 b) aufweist, welches ausgestaltet ist, um eine Flüssigfutterkomponente zu bevorraten, wobei der Mischtank (5) einen zweiten Mischtankzulauf aufweist, der mit dem Komponentensilo (1b) verbunden und ausgestaltet ist, um die Flüssigfutterkomponente dem Mischtank (5) zuzuführen, und
wobei der Mischtank (5) ausgestaltet ist, um das Flüssigfutter aus dem aufbereiteten pflanzlichen Rohstoff und der Flüssigfutterkomponente anzumischen.

11. Flüssigfütterungsanlage nach einem der vorstehenden Ansprüche,
wobei die Flüssigfütterungsanlage ferner einen Wassertank (3, 3a, 4, 4a) aufweist, welcher ausgestaltet ist, um Wasser zu bevorraten, und
wobei der Mischtank (5) einen dritten Mischtankzulauf aufweist, der mit dem Wassertank (3, 3a, 4, 4a) fluidtechnisch verbunden und ausgestaltet ist, um das Wasser dem Mischtank (5) zuzuführen.

12. Flüssigfütterungsanlage nach einem der vorstehenden Ansprüche,
wobei die Flüssigfütterungsanlage ferner eine Mahleinheit und/oder Mischeinheit aufweist, die zwischen dem Rohstoffsilo (1a) und dem Reaktor (20) angeordnet und ausgestaltet ist, um den pflanzlichen Rohstoff zu mahlen und/oder zu mischen,
wobei die Flüssigfütterungsanlage ferner eine Mahleinheit und/oder Mischeinheit aufweist, die zwischen dem Reaktor (20) und dem Mischtank (5) angeordnet und ausgestaltet ist, um den aufbereiteten pflanzlichen Rohstoff zu mahlen und/oder zu mischen, und/oder
wobei die Flüssigfütterungsanlage ferner eine Wiegeeinheit (6) aufweist, die ausgestaltet ist, um das Gewicht und/oder den Füllstand des Mischtankes (5) zu bestimmen.

13. Reaktor (20) einer Flüssigfütterungsanlage nach einem der vorstehenden Ansprüche,
wobei der Reaktor (20) ausgestaltet ist, um einen pflanzlichen Rohstoff zur Anmischung von Flüssigfutter für wenigstens ein Nutztier aufzubereiten,
wobei der Reaktor (20) einen Aufbereitungsbereich und ein Aufbereitungsmittel aufweist,
wobei der Aufbereitungsbereich ausgestaltet ist, um einen pflanzlichen Rohstoff aufzunehmen, und
wobei das Aufbereitungsmittel ausgestaltet ist, um den pflanzlichen Rohstoff durch Anlegen eines pulsierenden elektrischen Feldes an eine Zellstruktur des pflanzlichen Rohstoffes in dem Aufbereitungsbereich bei einem Energieeintrag im Bereich von 1 - 30, insbesondere 2 - 20, kJ/kg aufzubereiten;
wobei der Reaktor (20) mindestens einen Reaktorzulauf aufweist, der ausgestaltet ist, um mit mindestens einem Rohstoffsilo (1a), welches ausgestaltet ist, um den pflanzlichen Rohstoff zu bevorraten, verbunden zu werden und um dem Reaktor (20) den pflanzlichen Rohstoff zuzuführen, und
wobei der Reaktor (20) einen Reaktorablauf aufweist, der ausgestaltet ist, um mit einem Mischtank (5) verbunden zu werden und um den aufbereiteten pflanzlichen Rohstoff an den Mischtank (5) abzuführen.

14. Verwendung eines Reaktors (20) zum Aufbereiten eines pflanzlichen Rohstoffes in einer Flüssigfütterungsanlage nach einem der Ansprüche 1 bis 12
wobei der Reaktor (20) ausgestaltet ist, um den pflanzlichen Rohstoff zur Anmischung von Flüssigfutter für wenigstens ein Nutztier aufzubereiten,
wobei der Reaktor (20) einen Aufbereitungsbereich und ein Aufbereitungsmittel aufweist,
wobei der Aufbereitungsbereich ausgestaltet ist, um einen pflanzlichen Rohstoff aufzunehmen, und
wobei das Aufbereitungsmittel ausgestaltet ist, um den pflanzlichen Rohstoff durch Anlegen eines pulsierenden elektrischen Feldes an eine Zellstruktur des pflanzlichen Rohstoffes in dem Aufbereitungsbereich bei einem Energieeintrag im Bereich von 1 - 30, insbesondere 2 - 20, kJ/kg aufzubereiten:
wobei der Reaktor (20) mindestens einen Reaktorzulauf aufweist, der ausgestaltet ist, um mit mindestens einem Rohstoffsilo (1a), welches ausgestaltet ist, um den pflanzlichen Rohstoff zu bevorraten, verbunden zu werden und um dem Reaktor (20) den pflanzlichen Rohstoff zuzuführen, und
wobei der Reaktor (20) einen Reaktorablauf aufweist, der ausgestaltet ist, um mit einem Mischtank (5) verbunden zu werden und um den aufbereiteten pflanzlichen Rohstoff an den Mischtank (5) abzuführen.

15. Verfahren zum Anmischen von Flüssigfutter und zum Abgeben des angemischten Flüssigfutters an wenigstens ein Nutztier, mit den Schritten Bereitstellen eines Reaktors, wobei der Reaktor (20) ausgestaltet ist, um einen pflanzlichen Rohstoff zur Anmischung von Flüssigfutter für wenigstens ein Nutztier aufzubereiten, wobei der Reaktor (20) einen Aufbereitungsbereich und ein Aufbereitungsmittel aufweist, wobei der Aufbereitungsbereich ausgestaltet ist, um einen pflanzlichen Rohstoff aufzunehmen, wobei das Aufbereitungsmittel ausgestaltet ist, um den pflanzlichen Rohstoff durch Anlegen eines pulsierenden elektrischen Feldes an eine Zellstruktur des pflanzlichen Rohstoffes in dem Aufbereitungsbereich aufzubereiten,
Verbinden des Reaktors über mindestens einen Reaktorzulauf mit mindestens einem Rohstoffsilo (1a), welches ausgestaltet ist, um den pflanzlichen Rohstoff zu bevorraten,
Zuführen eines pflanzlichen Rohstoffs aus dem mindestens einem Rohstoffsilo (1a) an den Reaktor über den mindestens einen Reaktorzulauf,
Bereitstellen eines Mischtanks (5) zum Anmischen von Flüssigfutter und zum Abgeben des angemischten Flüssigfutters an eine Futterleitung mit wenigstens einem Futterventil (9) zur Abgabe des angemischten Flüssigfutters an wenigstens ein Nutztier,
Verbinden eines Reaktorablaufs des Reaktors (20) mit dem Mischtank (5), um den aufbereiteten pflanzlichen Rohstoff an den Mischtank (5) abzuführen, wobei der Mischtank (5) einen ersten Mischtankzulauf aufweist, der mit dem Reaktorablauf (20) fluidleitend verbunden ist,
Aufbereiten eines pflanzlichen Rohstoffes durch Anlegen eines pulsierenden elektrischen Feldes an eine Zellstruktur des pflanzlichen Rohstoffes bei einem Energieeintrag im Bereich von 1 - 30, insbesondere 2 - 20, kJ/kg,
Anmischen des Flüssigfutters aus dem aufbereiteten pflanzlichen Rohstoff, und Abgeben des angemischten Flüssigfutters an das wenigstens eine Nutztier.

## Claims

1. Liquid feed dispensing system for livestock comprising a mixing tank (5) for mixing liquid feed and for dispensing the mixed liquid feed to a feed line having at least one feed valve (9) for dispensing the mixed liquid feed to at least one animal, and a reactor (20) with one processing area and a processing means, wherein the processing area is configured to receive a vegetable-based raw material, and
the processing means is configured to process the vegetable-based raw material by applying a pulsing electric field to a cell structure of the vegetable-based raw material in the processing area,
and the liquid feed dispensing system is configured to process the vegetable-based raw material with an energy input in the range of 1 - 30, in particular 2 - 20, kJ/kg,
and the reactor (20) comprises at least one reactor intake which is configured to be connected to at least one raw material silo (1a) which is configured to supply the vegetable-based raw material and to direct the vegetable-based raw material to the reactor (20), and
the reactor (20) comprises a reactor outlet which is configured to be connected to the mixing tank (5) and to discharge the processed vegetable-based raw material to the mixing tank (5),
and the mixing tank (5) comprises a first mixing tank intake which is connected to the reactor outlet (20) in a fluid-conveying arrangement, and
the mixing tank (5) and the reactor (20) are connected to one another in order to direct the processed vegetable-based raw material from the reactor (20) to the mixing tank (5) for mixing the liquid feed from the processed vegetable-based raw material.

2. Liquid feed dispensing system as claimed in claim 1,
wherein the reactor (20) comprises at least one other processing area and/or at least one other processing means.

3. Liquid feed dispensing system as claimed in claim 1 or 2,
wherein the processing area is a treatment cell which in particular has a volume in the range of 100 - 1000, in particular 400 - 600, ml and/or which in particular has a diameter in the range of 10 - 100, in particular 30 to 50, mm;
and/or
the reactor (20) comprises a control unit for controlling operation of the processing area and/or the processing means, and/or
the reactor (20) comprises an interface, in particular for providing a connection to an external control unit;
and/or
the processing means is a pulse generator which in particular comprises a pulse transformer, in particular a high voltage pulse transformer, a flyback transformer and/or a Marx generator operating on the basis of the Marx principle;
and/or
the processing means is configured to process the vegetable-based raw material by applying a pulsing electric field with a pulse frequency of more than 30 pulses per second, in particular more than 60 pulses per second;
and/or
the reactor (20) comprises an arrangement of electrodes separated from one another by an isolator.

4. Liquid feed dispensing system as claimed in one of the preceding claims,
wherein the reactor (20) comprises a modular switch system,
and a first module of the modular switch system comprises the processing area and the processing means, and
a second module of the modular switch system comprises another processing area and another processing means.

5. Liquid feed dispensing system as claimed in one of the preceding claims,
wherein the liquid feed dispensing system is configured to process the vegetable-based raw material at a power of 1.5 - 5, in particular 2.5 - 3.5, kW per tonne of vegetable-based raw material.

6. Liquid feed dispensing system as claimed in one of the preceding claims,
wherein the reactor (20) comprises a measuring unit for determining quality and/or usability parameters, in particular convertible energy, dry mass, crude ash, total and extractable fat, protein, starch and sugar content, of the vegetable-based raw material and the processed vegetable-based raw material, and/or
the reactor (20) is configured to control operation of the processing area and/or processing means as a function of the determined quality and/or usability parameter(s).

7. Liquid feed dispensing system as claimed in one of the preceding claims,
wherein the liquid feed dispensing system further comprises at least one raw material silo (1a) which is connected to the reactor (20) in order to direct the vegetable-based raw material to the reactor (20).

8. Liquid feed dispensing system as claimed in one of the preceding claims,
wherein the liquid feed dispensing system further comprises a ring line and/or branch line serving as the feed dispensing line, and
the mixing tank (5) has a mixing tank outlet which is connected to the ring line and/or branch line in a fluid-conveying arrangement.

9. Liquid feed dispensing system as claimed in one of the preceding claims,
wherein the liquid feed dispensing system further comprises a raw material pump and/or a conveying auger (2) which is connected to the reactor (20) and configured to direct the processed vegetable-based raw material to the mixing tank (5),
and/or
the liquid feed dispensing system further comprises a feed pump (7) which is fluidically connected to the mixing tank (5) and configured to direct the mixed liquid feed to the feed dispensing line.

10. Liquid feed dispensing system as claimed in one of the preceding claims,
wherein the liquid feed dispensing system further comprises a component silo (1b) which is configured to supply a liquid feed component,
and the mixing tank (5) comprises a second mixing tank intake which is connected to the component silo (1b) and configured to direct the liquid feed component to the mixing tank (5), and
the mixing tank (5) is configured to mix the liquid feed from the processed vegetable-based raw material and the liquid feed component.

11. Liquid feed dispensing system as claimed in one of the preceding claims,
wherein the liquid feed dispensing system further comprises a water tank (3, 3a, 4, 4a) which is configured to supply water, and
the mixing tank (5) comprises a third mixing tank intake which is fluidically connected to the water tank (3, 3a, 4, 4a) and configured to direct the water to the mixing tank (5).

12. Liquid feed dispensing system as claimed in one of the preceding claims,
wherein the liquid feed dispensing system further comprises a grinding unit and/or mixing unit which is disposed between the raw material silo (1a) and the reactor (20) and configured to grind and/or mix the vegetable-based raw material,
and the liquid feed dispensing system further comprises a grinding unit and/or mixing unit which is disposed between the reactor (20) and the mixing tank (5) and configured to grind and/or mix the processed vegetable-based raw material, and/or
the liquid feed dispensing system further comprises a weighing unit (6) which is configured to determine the weight and/or filling level of the mixing tank (5).

13. Reactor (20) of a liquid feed dispensing system as claimed in one of the preceding claims,
wherein the reactor (20) is configured to process a vegetable-based raw material in order to mix liquid feed for at least one animal,
and the reactor (20) comprises a processing area and a processing means,
and the processing area is configured to receive a vegetable-based raw material,
and the processing means is configured to process the vegetable-based raw material by applying a pulsing electric field to a cell structure of the vegetable-based raw material in the processing area with an energy input in the range of 1 - 30, in particular 2 - 20, kJ/kg;
and the reactor (20) comprises at least one reactor intake which is configured to be connected to at least one raw material silo (1a) which is configured to supply the vegetable-based raw material and to direct the vegetable-based raw material to the reactor (20), and
the reactor (20) comprises a reactor outlet which is configured to be connected to the mixing tank (5) and to discharge the processed vegetable-based raw material to the mixing tank (5).

14. Use of a reactor (20) for processing a vegetable-based raw material in a liquid feed dispensing system as claimed in one of claims 1 to 12,
wherein the reactor (20) is configured to process the vegetable-based raw material in order to mix liquid feed for at least one animal,
and the reactor (20) comprises a processing area and a processing means,
and the processing area is configured to receive a vegetable-based raw material, and
the processing means is configured to process the vegetable-based raw material by applying a pulsing electric field to a cell structure of the vegetable-based raw material in the processing area with an energy input in the range of 1 - 30, in particular 2 - 20, kJ/kg;
and the reactor (20) comprises at least one reactor intake which is configured to be connected to at least one raw material silo (1a) which is configured to supply the vegetable-based raw material and to direct the vegetable-based raw material to the reactor (20), and
the reactor (20) comprises a reactor outlet which is configured to be connected to the mixing tank (5) and to discharge the processed vegetable-based raw material to the mixing tank (5).

15. Method of mixing liquid feed and dispensing the mixed liquid feed to at least one animal, comprising the steps: providing a reactor, which reactor (20) is configured to process a vegetable-based raw material for mixing liquid feed for at least one animal, and the reactor (20) comprises a processing area and a processing means, and the processing area is configured to receive a vegetable-based raw material, and the processing means is configured to process the vegetable-based raw material by applying a pulsing electric field to a cell structure of the vegetable-based raw material in the processing area,
connecting the reactor via at least one reactor intake to at least one raw material silo (1a) which is configured to supply the vegetable-based raw material, directing a vegetable-based raw material out of the at least one raw material silo (1a) to the reactor via the at least one reactor intake,
providing a mixing tank (5) for mixing liquid feed and for dispensing the mixed liquid feed to a feed line having at least one feed valve (9) for dispensing the mixed liquid feed to at least one animal,
connecting a reactor outlet of the reactor (20) to the mixing tank (5) in order to discharge the processed vegetable-based raw material to the mixing tank (5), and the mixing tank (5) comprises a first mixing tank intake which is connected to the reactor outlet (20) in a fluid-conveying arrangement,
processing a vegetable-based raw material by applying a pulsing electric field to a cell structure of the vegetable-based raw material with an energy input in the range of 1 - 30, in particular 2 - 20, kJ/kg, mixing the liquid feed from the processed vegetable-based raw material and
dispensing the mixed liquid feed to the at least one animal.

## Revendications

1. Installation d'alimentation liquide pour animaux de rente avec un réservoir de mélangeage (5) pour le mélangeage d'un aliment liquide et pour l'introduction de l'aliment liquide mélangé dans une conduite d'alimentation avec au moins une soupape d'alimentation (9) pour l'administration de l'aliment liquide mélangé à au moins un animal de rente, et un réacteur (20) avec une zone de préparation et un moyen de préparation,
dans laquelle la zone de préparation est conçue pour loger une matière première végétale, et
dans laquelle le moyen de préparation est conçu pour préparer la matière première végétale par l'application d'un champ électrique pulsant à une structure cellulaire de la matière première végétale dans la zone de préparation,
dans laquelle l'installation d'alimentation liquide est conçue pour préparer la matière première végétale avec un apport d'énergie de l'ordre de 1 à 30, plus particulièrement de 2 à 20 kJ/kg,
dans laquelle le réacteur (20) comprend au moins une entrée de réacteur conçue pour être reliée à au moins un silo de matière première (1a), qui est conçu pour contenir la matière première végétale, et pour introduire la matière première végétale dans le réacteur (20), et
dans laquelle le réacteur (20) comprend une sortie de réacteur conçue pour être reliée au réservoir de mélangeage (5) et pour évacuer la matière première végétale préparée vers le réservoir de mélangeage (5),
dans laquelle le réservoir de mélangeage (5) comprend une première entrée de réservoir de mélangeage, qui est reliée de manière fluidique à la sortie du réacteur (20), et
dans laquelle le réservoir de mélangeage (5) et le réacteur (20) sont reliés entre eux pour conduire la matière première végétale préparée du réacteur (20) vers le réservoir de mélangeage (5) pour le mélangeage de l'aliment liquide à partir de la matière première préparée.

2. Installation d'alimentation liquide selon la revendication 1, dans laquelle le réacteur (20) comprend au moins une zone de préparation supplémentaire et/ou au moins un moyen de préparation supplémentaire.

3. Installation d'alimentation liquide selon la revendication 1 ou 2,
dans laquelle la zone de préparation est une cellule de traitement qui présente plus particulièrement un volume de l'ordre de 10 à 1000, plus particulièrement de 400 à 600 ml, et/ou qui présente plus particulièrement un diamètre de l'ordre de 10 à 100, plus particulièrement de 30 à 50 mm ;
et/ou
dans laquelle le réacteur (20) comprend une unité de contrôle pour le contrôle du fonctionnement de la zone de préparation et/ou du moyen de préparation, et/ou dans laquelle le réacteur (20) comprend une unité d'interface, plus particulièrement pour le relier avec une unité de contrôle externe ;
et/ou
dans laquelle le moyen de préparation est un générateur d'impulsions qui comprend plus particulièrement un transformateur d'impulsions, plus particulièrement un transformateur d'impulsions à haute tension, un convertisseur à découpage et/ou un générateur de Marx fonctionnant selon le principe de Marx ;
et/ou
dans laquelle le moyen de préparation est conçu pour préparer la matière première végétale par l'application d'un champ électrique pulsant avec un taux de répétition des impulsions supérieur à 30 impulsions par seconde, plus particulièrement supérieur à 60 impulsions par seconde ;
et/ou
dans laquelle le réacteur (20) comprend un dispositif à électrodes séparées entre elles par un isolant.

4. Installation d'alimentation liquide selon l'une des revendications précédentes,
dans laquelle le réacteur (20) comprend un système de commutation modulaire, dans laquelle un premier module du système de commutation modulaire comprend la zone de préparation et le moyen de préparation, et
dans laquelle un deuxième module du système de commutation modulaire comprend une zone de préparation supplémentaire et un moyen de préparation supplémentaire.

5. Installation d'alimentation liquide selon l'une des revendications précédentes,
dans laquelle l'installation d'alimentation liquide est conçue pour préparer la matière première végétale avec une puissance de 1,5 à 5, plus particulièrement de 2,5 à 3,5 kW par tonne de matière première végétale.

6. Installation d'alimentation liquide selon l'une des revendications précédentes,
dans laquelle le réacteur (20) comprend une unité de mesure pour la détermination des paramètres de qualité et/ou de la possibilité de valorisation, plus particulièrement de l'énergie convertible, de la masse sèche, de la teneur en cendres brutes, de la teneur totale et extractible en graisses, en protéines, en amidon et en sucres, de la matière première végétale ou de la matière première végétale préparée, et/ou dans laquelle le réacteur (20) est conçu pour réguler le fonctionnement de la zone de préparation et/ou du moyen de préparation en fonction du ou des paramètres de qualité et/ou de possibilité de valorisation déterminés.

7. Installation d'alimentation liquide selon l'une des revendications précédentes,
dans laquelle l'installation d'alimentation liquide comprend en outre un silo de matière première (1a) relié au réacteur (20), afin d'introduire la matière première végétale dans le réacteur (20).

8. Installation d'alimentation liquide selon l'une des revendications précédentes,
dans laquelle l'installation d'alimentation liquide comprend en outre une conduite annulaire et/ou une conduite de dérivation en tant que conduite d'alimentation, et dans laquelle le réservoir de mélangeage (5) comprend une sortie de réservoir de mélangeage qui est reliée de manière fluidique à la conduite annulaire et/ou conduite de dérivation.

9. Installation d'alimentation liquide selon l'une des revendications précédentes,
dans laquelle l'installation d'alimentation liquide comprend en outre une pompe de matière première et/ou une vis sans fin de convoyage (2), qui est reliée au réacteur (20) et est conçue pour introduire la matière première végétale préparée dans le réservoir de mélangeage (5), et/ou
dans laquelle l'installation d'alimentation liquide comprend en outre une pompe d'alimentation (7) qui est reliée de manière fluidique au réservoir de mélangeage (5) et qui est conçue pour introduire l'aliment liquide mélangé dans la conduite d'alimentation.

10. Installation d'alimentation liquide selon l'une des revendications précédentes,
dans laquelle l'installation d'alimentation liquide comprend en outre un silo de composé (1b) qui est conçu pour contenir un composé d'aliment liquide,
dans laquelle le réservoir de mélangeage (5) comprend une deuxième entrée de réservoir de mélangeage qui est reliée au silo de composé (1b) et qui est conçue pour introduire le composé d'aliment liquide dans le réservoir de mélangeage (5), et
dans laquelle le réservoir de mélangeage (5) est conçu pour mélanger l'aliment liquide obtenu à partir de la matière première végétale préparée et le composé d'aliment liquide.

11. Installation d'alimentation liquide selon l'une des revendications précédentes,
dans laquelle l'installation d'alimentation liquide comprend en outre un réservoir d'eau (3, 3a, 4, 4a), qui est conçu pour contenir de l'eau, et
dans laquelle le réservoir de mélangeage (5) comprend une troisième entrée de réservoir de mélangeage qui est reliée de manière fluidique au réservoir d'eau (3, 3a, 4, 4a) et qui est conçue pour introduire l'eau dans le réservoir de mélangeage (5).

12. Installation d'alimentation liquide selon l'une des revendications précédentes,
dans laquelle l'installation d'alimentation liquide comprend en outre une unité de broyage et/ou une unité de mélangeage, qui est disposée entre le silo de matière première (1a) et le réacteur (20) et qui est conçue pour broyer et/ou mélanger la matière première végétale,
dans laquelle l'installation d'alimentation liquide comprend en outre une unité de broyage et/ou une unité de mélangeage qui est disposée entre le réacteur (20) et le réservoir de mélangeage (5) et qui est conçue pour broyer et/ou mélanger la matière première végétale préparée, et/ou
dans laquelle l'installation d'alimentation liquide comprend en outre une unité de pesage (6) qui est conçue pour déterminer le poids et/ou le niveau de remplissage du réservoir de mélangeage (5).

13. Réacteur (20) d'une installation d'alimentation liquide selon l'une des revendications précédentes,
dans lequel le réacteur (20) est conçu pour préparer une matière première végétale pour le mélange d'un aliment liquide pour au moins un animal de rente,
dans lequel le réacteur (20) comprend une zone de préparation et un moyen de préparation,
dans lequel la zone de préparation est conçue pour recevoir une matière première végétale, et
dans lequel le moyen de préparation est conçu pour préparer la matière première végétale par l'application d'un champ électrique pulsant à une structure cellulaire de la matière première végétale dans la zone de préparation, avec un apport d'énergie de l'ordre de 1 à 30, plus particulièrement de 2 à 20 kJ/kg ;
dans lequel le réacteur (20) comprend au moins une entrée de réacteur qui est conçue pour être reliée à au moins un silo de matière première (1a) conçu pour contenir la matière première végétale, et pour introduire la matière première végétale dans le réacteur (20), et
dans lequel le réacteur (20) comprend une sortie de réacteur qui est conçue pour être reliée à un réservoir de mélange (5) et pour évacuer la matière première végétale préparée vers le réservoir de mélangeage (5).

14. Utilisation d'un réacteur (20) pour la préparation d'une matière première végétale dans une installation d'alimentation liquide selon l'une des revendications 1 à 12,
dans laquelle le réacteur (20) est conçu pour préparer la matière première végétale pour le mélange d'un aliment liquide pour au moins un animal de rente,
dans laquelle le réacteur (20) comprend une zone de préparation et un moyen de préparation,
dans laquelle la zone de préparation est conçue pour contenir une matière première végétale, et
dans laquelle le moyen de préparation est conçu pour préparer la matière première végétale par application d'un champ électrique pulsant à une structure cellulaire de la matière première végétale dans la zone de préparation, avec un apport d'énergie de l'ordre de 1 à 30, plus particulièrement de 2 à 20 kJ/kg ;
dans laquelle le réacteur (20) comprend au moins une entrée de réacteur qui est conçue pour être reliée à au moins un silo de matière première (1a) conçu pour contenir la matière première végétale, et pour introduire la matière première végétale dans le réacteur (20), et
dans laquelle le réacteur (20) comprend une sortie de réacteur qui est conçue pour être reliée à un réservoir de mélangeage (5) et pour évacuer la matière première végétale vers le réservoir de mélangeage (5).

15. Procédé de mélangeage d'un aliment liquide et d'administration de l'aliment liquide mélangé à au moins un animal de rente, avec les étapes suivantes :
mise à disposition d'un réacteur, le réacteur (20) étant conçu pour préparer une matière première végétale pour le mélangeage d'un aliment liquide pour au moins un animal de rente, le réacteur (20) comprenant une zone de préparation et un moyen de préparation, la zone de préparation étant conçue pour contenir une matière première végétale, le moyen de préparation étant conçu pour préparer la matière première végétale par l'application d'un champ électrique pulsant à une structure cellulaire de la matière première végétale dans la zone de préparation,
connexion du réacteur, par l'intermédiaire d'au moins une entrée de réacteur, à au moins un silo de matière première (1a) qui est conçu pour contenir la matière première végétale,
introduction d'une matière première végétale provenant dudit au moins un silo de matière première (1a) dans le réacteur par l'intermédiaire de ladite au moins une entrée de réacteur,
mise à disposition d'un réservoir de mélangeage (5) pour le mélangeage d'un aliment liquide et pour l'introduction de l'aliment liquide mélangé dans une conduite d'alimentation avec au moins une soupape d'alimentation (9) pour l'administration de l'aliment liquide mélangé à au moins un animal de rente,
connexion d'une sortie de réacteur que comprend le réacteur (20) au réservoir de mélangeage (5), pour évacuer la matière première végétale vers le réservoir de mélangeage (5), le réservoir de mélangeage (5) comprenant une première entrée de réservoir de mélangeage qui est reliée de manière fluidique à la sortie du réacteur (20),
préparation d'une matière première végétale par application d'un champ électrique pulsant à une structure cellulaire de la matière première végétale avec un apport d'énergie de l'ordre de 1 à 30, plus particulièrement de 2 à 20 kJ/kg,
mélangeage de l'aliment liquide constitué de la matière première végétale préparée et administration de l'aliment liquide mélangé à l'au moins un animal de rente.
